(19) Europäisches Patentamt
European Patent Office
Office européen des brevets

(11) **EP 2 480 911 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **10743155.3**

(22) Anmeldetag: **18.08.2010**

(51) Int Cl.:
*G01S 7/536* *(2006.01)*     *G01S 15/89* *(2006.01)*

(86) Internationale Anmeldenummer:
**PCT/EP2010/062050**

(87) Internationale Veröffentlichungsnummer:
**WO 2011/035996 (31.03.2011 Gazette 2011/13)**

(54) **VERFAHREN UND VORRICHTUNG ZUM VERMESSEN EINES BODENPROFILS**

METHOD AND DEVICE FOR MEASURING A CONTOUR OF THE GROUND

PROCÉDÉ ET DISPOSITIF DE MESURE D'UN PROFIL DU SOL

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.09.2009 DE 102009042968**

(43) Veröffentlichungstag der Anmeldung:
**01.08.2012 Patentblatt 2012/31**

(73) Patentinhaber: **ATLAS ELEKTRONIK GmbH**
**28309 Bremen (DE)**

(72) Erfinder:
• **FREKING, Benno**
**28844 Weyhe-Leeste (DE)**
• **FAßBENDER, Tobias**
**28207 Bremen (DE)**

(56) Entgegenhaltungen:
**GB-A- 2 197 952     US-A- 5 200 931**

• **SINTES C ET AL: "Strategies for unwrapping multisensors interferometric side scan sonar phase", OCEANS 2000 MTS/IEEE CONFERENCE AND EXHIBITION SEPT. 11-14, 2000, PISCATAWAY, NJ, USA,IEEE, Bd. 3, 11. September 2000 (2000-09-11), Seiten 2059-2065, XP010521176, ISBN: 978-0-7803-6551-3**
• **GRIFFITHS H D: "A comparison between radar and sonar synthetic aperture interferometry", 19970411, 11. April 1997 (1997-04-11), Seiten 4/1-4/5, XP006509424,**
• **PHILIP N DENBIGH: "Signal Processing Strategies for a Bathymetric Sidescan Sonar", IEEE JOURNAL OF OCEANIC ENGINEERING, IEEE SERVICE CENTER, PISCATAWAY, NJ, US, Bd. 19, Nr. 3, 1. Juli 1994 (1994-07-01), Seiten 382-391, XP007916045, ISSN: 0364-9059 in der Anmeldung erwähnt**

**Beschreibung**

Die Erfindung betrifft ein Verfahren zum Vermessen eines Bodenprofils mittels einer an einem Wasserfahrzeug angebrachten Sende- und Empfangsanordnung der im Oberbegriff des Anspruchs 1 genannten Art sowie eine Vorrichtung zum Ausführen des Verfahrens gemäß Anspruch 6.

Die Erfindung findet unter anderem Anwendung bei der Vermessung eines Bodenprofils innerhalb eines vorbestimmten Unterwasserareals oder bei der Suche nach versunkenen Objekten. Wird das Unterwasserareal vor dem Wasserfahrzeug beleuchtet, dient dies unter anderem der Kollisionsvermeidung und/oder der Navigation.

Um eine detaillierte Objektdetektion zu erhalten, ist eine hohe Winkelauflösung der Empfangsanordnung notwendig. Dies wird herkömmlicher Weise mittels einer Empfangsanordnung mit einer Vielzahl von Wandlern und einem nachgeschalteten Richtungsbildner erreicht. Der Richtungsbildner verarbeitet die jeweiligen Empfangssignale der Wandler derart, dass die Empfangsanordnung in einem festgelegten Unterwasserareal einen Fächer von einer Vielzahl gegeneinander verschwenkten Richtcharakteristiken bzw. Beams aufspannt. Dabei können die Empfangsanordnungen bspw. als Linear-Array oder Conformal-Arrays bzw. Hufeisen oder Zylinderbasen ausgebildet sein. DE 199 59 014 A1 zeigt bspw. ein Verfahren zum Bestimmen von Tiefenwerten eines Gewässers mit einem Fächerlot. Dabei werden je Lotfächer für eine Folge von Fächerstrahlen Schalllaufzeiten gemessen und daraus die Tiefen- und Ablagewerte berechnet. Da die Auflösung dieser Wandler-Arrays der Beambreite entspricht, entsteht jedoch ein sehr hoher Kostenaufwand für eine hinreichend genaue Winkelauflösung.

Neben diesen Verfahren mittels eines Wandler-Arrays als Empfangsanordnung, dessen Auflösung durch die Bauart der Empfangsanordnung beschränkt ist, sind auch sog. hochauflösende Verfahren zur Winkelbestimmung bekannt. Zu diesen Verfahren zählt unter anderem das MUSIC (Multiple Signal Classification) - Verfahren. Die Genauigkeit der Ergebnisse ist jedoch auch bei diesen Verfahren abhängig von der Wandleranzahl der Empfangsanordnung. Je mehr Wandler die Empfangsanordnung besitzt und je länger der verarbeitende Signalblock ist, desto genauer sind die Ergebnisse. Der Nachteil dieser Verfahren liegt zudem in ihrem hohen Rechenaufwand, der einen Einsatz in Echtzeitsystemen erschwert.

Alternativ ist es bekannt, die Vermessung des Bodenprofils mittels Phasenauswertung der von den Wandlern empfangenen Schallwellen durchzuführen. DE 10 2005 041 390 A1 zeigt ein Verfahren zum Erzeugen eines Sonarbildes. Dazu wird ein von einem Wasserfahrzeug getragenes Sonar verwendet, das eine Sendeantenne zum Abstrahlen von Schallimpulsen und eine Empfangsantenne mit einer Vielzahl von Hydrofonen aufweist. In einem Ausführungsbeispiel wird die Erzeugung eines dreidimensionalen Sonarbildes unter Verwendung einer interferometrischen Messmethode offenbart. Hierfür wird eine zweite, vorzugsweise identisch der ersten ausgebildeten Empfangsantenne benötigt. Ein zu ermittelnder Tiefenwert wird durch Korrelation der Empfangssignale beider Empfangsantennen bestimmt.

In dem Artikel "Signal Processing Strategies for a Bathymetric Sidescan Sonar" von Philip N. Denbigh aus IEEE Journal of Oceanic Engineering, 19(3): 382-390, July 1994 sind Prinzipien der direkten Phasenmessung in interferometrischen Systemen näher beschrieben. Bei einer derartigen interferometrischen Technik wird ein zweiter, unabhängig von dem ersten arbeitender Wandler benötigt. Dieser liefert ein weiteres Empfangssignal, welches durch die unterschiedlichen Entfernungen zum Objekt ein zum ersten Wandler zeitverzögertes Signal liefert. Beträgt jedoch der Abstand der Wandler ein Mehrfaches der Wellenlänge der empfangenen Schallwellen, gibt die gemessene Phasenverschiebung, die zwischen 0 und $2\pi$ liegt, eine Schar von möglichen Empfangswinkeln an. Eine derartige Vieldeutigkeit bei der Winkelbestimmung wird herkömmlicherweise durch Verwendung von mehreren Wandlern, die sich in geeignetem Abstand befinden, vermieden.

DE 1 548 452 A zeigt ein Verfahren zur Bestimmung von Höhenlinien des Meeresgrundes. Die gesuchten Höhenlinien können direkt durch eine besondere Anordnung der Sende-Empfangs-Einrichtung aufgezeichnet werden. Gemäß dieser Anordnung sind die Sende- und Empfangseinrichtungen in einem solchen Abstand voneinander angeordnet, dass nach der Reflexion an dem Meeresgrund Wellen, die von dem gleichen Sender ausgesendet und von zwei voneinander entfernten Empfängern empfangen werden, gleichphasig empfangen werden. Nachteilig dabei ist die Notwendigkeit, ein Bestimmtes Anordnungsverhältnis einzuhalten, welches stets angepasst werden muss. Bei Verwendung von mehreren Wandlern entstehen jedoch ebenfalls nachteilig höhere Kosten.

Der Erfindung liegt daher das Problem zugrunde, ein kostengünstiges Verfahren zum Vermessen eines Bodenprofils anzugeben, welches mittels Phasenauswertung eindeutige Messergebnisse liefert.

Die Erfindung löst dieses Problem durch die Merkmale eines Verfahrens gemäß Anspruch 1 sowie durch eine entsprechende Vorrichtung mit den Merkmalen des Anspruchs 6.

Dabei werden zunächst mittels einer Sendeanordnung impulsförmige Schallsignale gerichtet abgestrahlt. Die Sendeanordnung besitzt dabei eine in Vorrausrichtung sehr schmale Richtcharakteristik, so dass nur die Echos eines schmalen Bodenstreifens empfangen werden.

In einer Mehrzahl von N Lotungen aus vorbestimmten Positionen mit voneinander verschiedenen Aspektwinkeln und Entfernungen zum Bodenprofil wird ein Schallsignal in das Unterwasserareal abgestrahlt und dessen reflektierte Anteile mittels der Empfangsanordnung empfangen, wobei die Empfangsanordnung vorteilhaft mit zwei einzelnen Wandlern auskommt. Die Vermessung des Bodenprofils erfolgt anhand der Empfangssignale der zwei Wandler unter Verwendung einer reinen Phasenauswertung und einer anschließenden Dichteanalyse der Messwerte.

Abhängig von dem Abstand der Wandler der Empfangsanordnung und der Frequenz bzw. der Wellenlänge des ausgesendeten Schallsignals liefert eine reine Phasenauswertung vieldeutige Ergebnisse. Das erfindungsgemäße Verfahren berücksichtigt zunächst diese Vieldeutigkeit bei der Winkelbestimmung nicht.

Die durch die vieldeutigen Ergebnisse der Phasenauswertung entstehende Mehrfachmessung des Bodenprofils aus unterschiedlichen Positionen der Sendeanordnung wird zur eindeutigen Bestimmung des Bodenprofils unter Verwendung einer Dichteanalyse genutzt. Dabei liefert eine Phasendifferenz zwischen zwei Empfangssignalen zu einer Vielzahl vorbestimmter Abtastzeitpunkte und zu den N Lotungen aus unterschiedlichen Positionen abhängig von dem Abstand der Wandler der Empfangsanordnung mehrere vieldeutige Gangunterschiede. Aus diesen vieldeutigen Gangunterschieden lassen sich für diese Abtastzeitpunkte und für die N Lotungen zugehörige Auftreffwinkel und Auftreffkoordinaten ermitteln. Für die Abtastzeitpunkte und die N Lotungen werden für die vieldeutigen Auftreffkoordinaten jeweils eine Datendichte in einem vorbestimmten die Auftreffkoordinate beinhaltenden Bereich ermittelt. In dem Bereich, an der sich der wahre Bodenpunkt befindet, erhöht sich die Dichte der Messwerte. Die Orte der weiteren vieldeutigen Auftreffkoordinaten, die sich aufgrund der Phasenauswertung ergeben, weisen eine geringere Datendichte auf und werden als ungültig gekennzeichnet. Das erfindungsgemäße Verfahren liefert somit eine Methode um festzustellen, welches die wahre Auftreffkoordinate auf dem Bodenprofil ist.

Das erfindungsgemäße Verfahren hat den Vorteil, dass trotz einer zuvor erwähnten Vieldeutigkeit der Winkelbestimmung bei Verwendung einer Empfangsanordnung mit wenigstens zwei Wandlern eindeutige Messergebnisse erzielt werden können, indem die Vermessung des Bodenprofils aus unterschiedlichen Positionen mit voneinander verschiedenen Aspektwinkeln und Entfernungen zum Bodenprofil erfolgt und anschließend eine Dichteanalyse der Messdaten durchgeführt wird.

In einer weiteren Ausführungsform der Erfindung besitzt die erfindungsgemäße Vorrichtung den Vorteil, dass sie sich unter Verwendung einer Empfangsanordnung mit nur zwei einzelnen Wandlern herstellen lässt. Das erfindungsgemäße Verfahren liefert auch eindeutige Messergebnisse des Bodenprofils, wenn der Abstand der Wandler größer als die halbe Wellenlänge des Empfangssignals bzw. der empfangenen Schallwellen ist. Durch die vorzugsweise kleine Abmessung kann eine derartige Empfangsanordnung beispielsweise auch von kleinen, autonomen agierenden oder ferngesteuerten Unterwasserfahrzeugen getragen werden.

In einer weiteren Ausführungsform der Erfindung wird als Empfangsvorrichtung ein Wandler-Array verwendet. Ist die Sendeanordnung nicht derart ausgelegt, dass ein gerichtetes Abstrahlen von Schallsignalen in ein Unterwasserareal möglich ist bzw. besitzt die Sendeanordnung eine in Vorrausrichtung des Wasserfahrzeugs breite Richtcharakteristik, so hat eine Empfangsanordnung mit einer Vielzahl von Wandlern und einem nachgeschalteten Richtungsbildner bzw. Beamformer, der in dem Unterwasserareal eine Vielzahl von fächerartig aufgespannten Beams erzeugt, den Vorteil, die Auflösung des Sonarsystems entsprechend der Beambreite zu erhöhen.

In einer weiteren Ausführungsform der Erfindung entsprechen die Bereiche, in denen die Dichte der Messwerte ermittelt wird, Flächenelementen mit einer vorbestimmten Größe. Diese Flächenelemente sind dabei für alle Auftreffkoordinaten gleich groß. Vorteilhafterweise wird die Größe entsprechend des Rechenaufwandes sowie der geforderten Auflösung festgelegt.

In einer weiteren Ausführungsform der Erfindung werden die N voneinander verschiedenen Positionen der N Lotungen durch eine Vorwärtsbewegung der Sende- und Empfangsanordnung vorgegeben. Vorzugsweise entspricht dies einer Vorwärtsbewegung des Wasserfahrzeugs. Der Vorteil einer derartigen Ausführungsform liegt darin, dass die Sende- und Empfangsanordnungen statt in einer schwenkbaren Ausführung starr befestigt sein können.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:

Fig. 1    eine schematische Darstellung eines Wasserfahrzeugs mit dem zu erfassenden Unterwasserareal,

Fig. 2 A-B    eine schematische Darstellung des Sonarsystems,

Fig. 3    eine schematische Darstellung der Empfangsanordnung,

Fig. 4    ein Flussdiagramm des erfindungsgemäßen Verfahrens,

Fig. 5    eine schematische Darstellung einer auf die Wandler treffenden Schallwellenfront und

Fig. 6    ein Blockschaltbild der erfindungsgemäßen Vorrichtung zum Ausführen des Verfahrens.

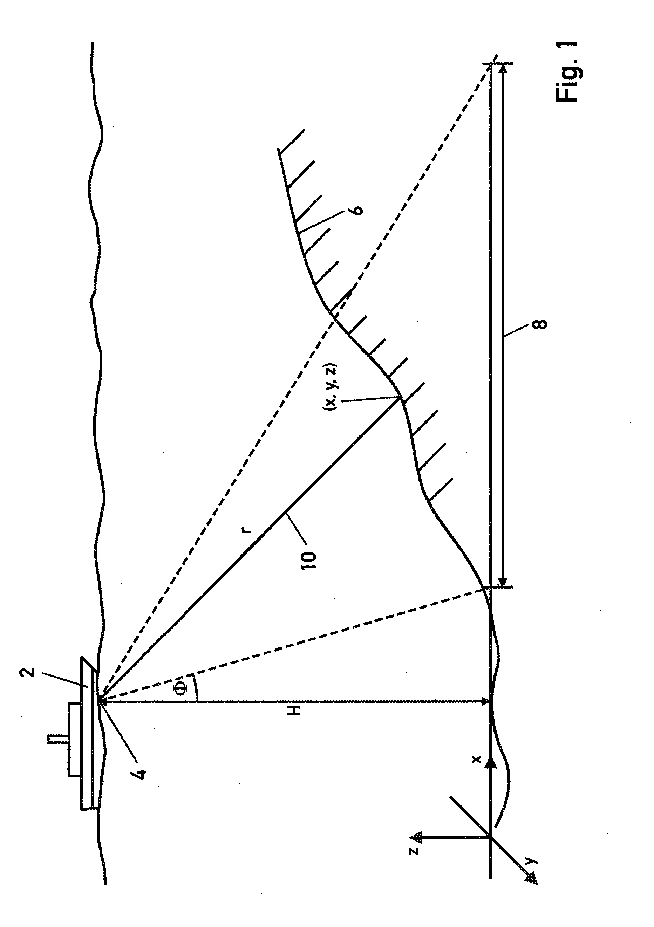

Fig. 1 zeigt eine schematische Darstellung eines in einem Seegebiet fahrenden Wasserfahrzeugs 2 mit einem Forward-Looking-Sonarsystem 4. Dieses Sonarsystem 4 weist eine Sende- und Empfangsanordnung auf sowie eine dazugehörende Signalverarbeitung zur Datenerfassung eines Bodenprofils 6. Die Erfindung ist jedoch nicht auf das Ausführungsbeispiel mittels eines Forward-Looking-Sonarsystems 4 beschränkt. Ferner ist bspw. eine Schallabstrahlung über das Heck eines Wasserfahrzeugs 2 möglich.

In Fig. 1 ist darüber hinaus die Messgeometrie mit der Entfernung r eines Bodenpunktes zum Sonarsystem 4 dargestellt. Die Entfernung r lässt sich über die Laufzeit des reflektierten Schallsignals ermitteln. Der Schallimpuls benötigt eine gewisse Zeit, bis er den Boden erreicht, reflektiert wird und nach einer weiteren Laufzeit an der Empfangsanordnung eintrifft. Aufgrund dieser messbaren Gesamtlaufzeit kann mittels der bekannten Schallgeschwindigkeit die Entfernung $r$ eines Objekts bzw. des Bodenpunktes ermittelt werden.

Des Weiteren sind eine Bezugshöhe $H$ und der Aspektwinkel $\phi$ in Lotrichtung zu dem Sonarsystem 4 dargestellt.

Zur Vermessung des Bodenprofils 6 werden von dem Sonarsystem 4 Schallsignale gerichtet in ein Unterwasserareal 8 abgestrahlt und die reflektierten Schallwellen 10 einer Vielzahl von Bodenpunkten (x, y, z) empfangen. Dabei weist das Sonarsystem 4 quer zur Fahrtrichtung eine sehr stark gebündelte Schallabstrahlung und in Fahrzeuglängsrichtung eine weite Richtcharakteristik auf. Dadurch werden nur die Echos eines schmalen Bodenstreifens empfangen.

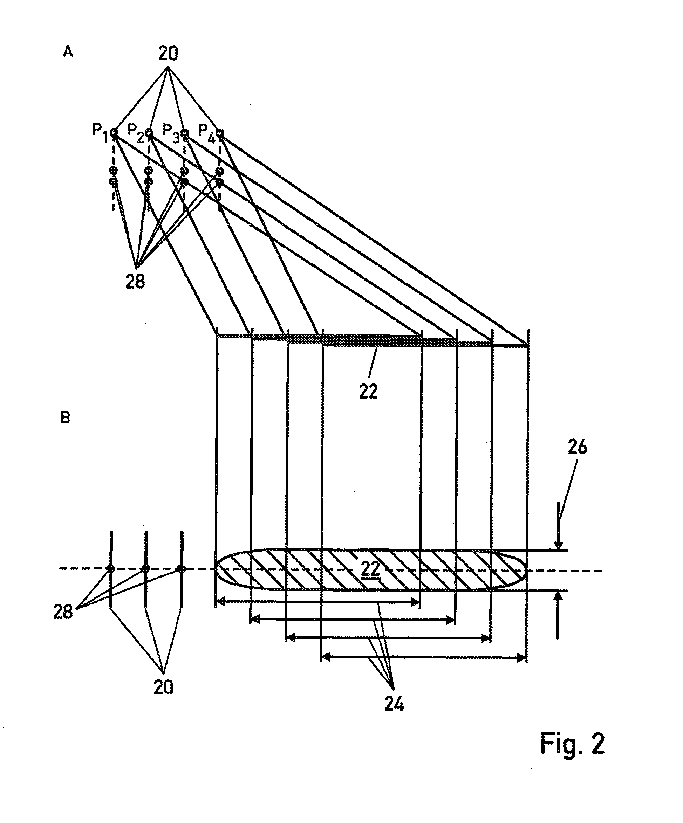

Die Ausdehnung des beleuchteten Unterwasserareals 8 ist abhängig von der Formation des Sonarsystems 4, welches in Fig. 2 detailliert dargestellt ist.

Fig. 2 A-B zeigen eine schematische Darstellung des Sonarsystems 4. In Fig. 2 A ist eine Seitenansicht des Sonarsystems 4 dargestellt und in Fig. 2 B eine Draufsicht der gleichen Anordnung.

Die Sendeanordnung 20 weist eine Vielzahl auf einem Antennenträger angeordneter Wandler auf, welche gerichtete Schallsignale in Form eines Sendebeams 22 in ein vorbestimmtes Unterwasserareal 8 aussenden. Der so entstehende Sendebeam 22 in Form einer Ellipse hat eine Länge 24 und eine vom Öffnungswinkel der zu der Sendeanordnung zugehörigen Richtcharakteristik abhängigen Breite 26.

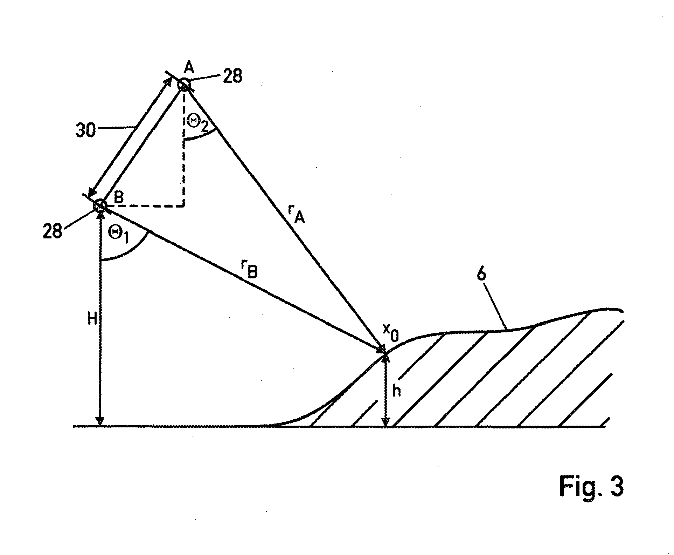

Von dieser Sendeanordnung 20 wird nacheinander mit einer Mehrzahl von N Lotungen aus vorbestimmten Positionen $P_1, P_2, P_3, P_4, ..., P_N$ mit voneinander verschiedenen Aspektwinkeln $\phi_N$ und Entfernungen $r_N$ zum Bodenprofil 6 ein Schallsignal in das Unterwasserareal 8 gesendet, wobei sich die unterschiedlichen Positionen $P_1, P_2, P_3, P_4, ..., P_N$ der N Lotungen vorzugsweise aus der Vorwärtsbewegung des Wasserfahrzeugs 4 ergeben. Alternativ ist es denkbar, das Sonarsystem 4 schwenkbar an dem Wasserfahrzeug 2 zu befestigen, um die unterschiedlichen Positionen $P_1, P_2, P_3, P_4, ..., P_N$ der N Lotungen direkt mittels einer entsprechenden Bewegung des Sonarsystems 4 zu erzeugen. Die von dem Bodenprofil 6 innerhalb des Unterwasserareals 8 reflektierten Anteile des Schallsignals werden über die Empfangsanordnung 28 empfangen, welche in Fig. 3 detailliert dargestellt ist.

Fig. 3 zeigt eine schematische Darstellung der Empfangsanordnung 28. Um zusätzlich zu der Entfernung r auch eine Höhe h des Bodenprofils 6 zu ermitteln, wird eine Empfangsanordnung 28 mit wenigstens zwei voneinander verschiedenen Wandlern benötigt. In dieser Ausführungsform der Erfindung besteht die Empfangsanordnung 28 aus zwei einzelnen Wandlern A und B, wie sie in Fig. 3 dargestellt sind. Sie weisen einen Abstand 30 voneinander auf, der größer ist als die halbe Wellenlänge λ des von der Sendeanordnung 20 abgegebenen Schallsignals. Aus dieser geringen Positionsverschiebung der Wandler A und B ergeben sich signifikante Laufzeitunterschiede des Empfangssignals, die auf der Grundlage von Phasenmessungen präzise ermittelt werden können.

Es ist jedoch gleichwohl möglich eine vorhandene Wandlerbasis zu nutzen, aus der zwei Wandler herausgegriffen werden. Ebenso ist das erfindungsgemäße Verfahren mit zwei Wandler-Arrays, welche übereinander gemäß Fig. 2 angeordnet sind durchführbar. Erfordert es die Bauart des Wasserfahrzeugs 2, so können die Wandler auch leicht versetzt angeordnet sein. Die Geometrie der Empfangsanordnung 28 muss jedoch bei einer Signalverarbeitung der Empfangssignale entsprechend berücksichtigt werden.

Der Wandler A liefert ein Empfangssignal, welches durch die unterschiedlichen Entfernungen $r_A$ und $r_B$ zum Bodenpunkt $x_0$ gegenüber dem Wandler B zeitverzögert ist. Die vom Punkt $x_0$ reflektierten Anteile des gesendeten Schallsignals erreichen zuerst den Wandler B und um $\Delta t$ verzögert den Wandler A. Aus der Phasendifferenz der zugehörigen Empfangssignale lässt sich eine Höhe $h$ ermitteln, die bezogen ist auf die Bezugshöhe $H$ in Lotrichtung unterhalb der Empfangsanordnung 28. Die Berechnung erfolgt aus der Geometrie der Messanordnung:

$$h = H - r_B \cos\theta_1$$

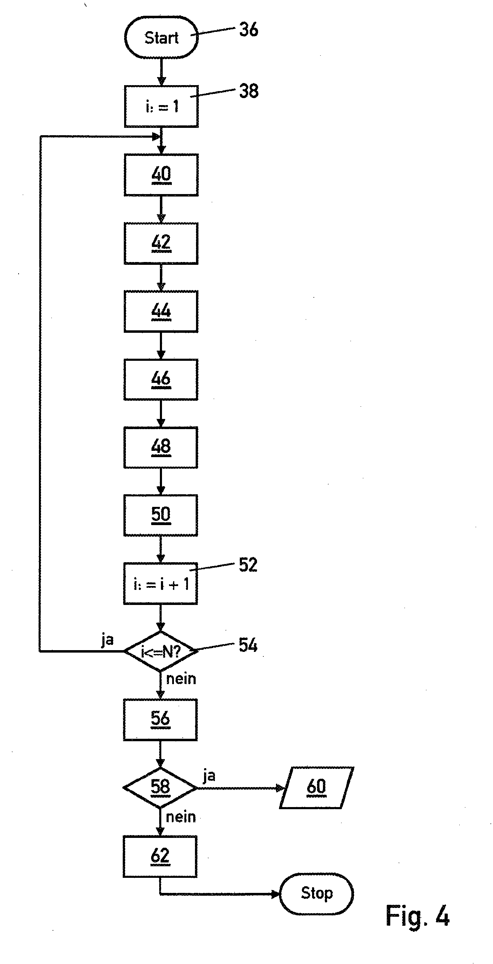

Fig. 4 zeigt ein Flussdiagramm zur Beschreibung eines Ausführungsbeispiels des erfindungsgemäßen Verfahrensablaufes, welches auf einer Mehrfachvermessung von Bodenelementen aus unterschiedlichen Entfernungen $r_N$ und Aspektwinkeln $\phi_N$ beruht. Dazu wird nach einer Initialisierung in Block 36 zunächst einer Zählvariable i in Block 38 der Wert 1 zugewiesen.

Zum Vermessen des Bodenprofils wird gemäß Block 40 aus einer vordefinierten Position $P_1$ mittels der Sendeanordnung 20 ein Schallsignal in einen, vorzugsweise in Vorrausrichtung schmalen und in vertikaler Richtung breiten, Winkelbereich ausgesendet.

Die vom Boden bzw. Objekt reflektierten Schallwellen werden von zwei Wandlern A und B empfangen, die daraus jeweils ein Empfangssignal erzeugen, welches in Block 42 zu vorbestimmten Abtastzeitpunkten abgetastet, digitalisiert und gespeichert wird.

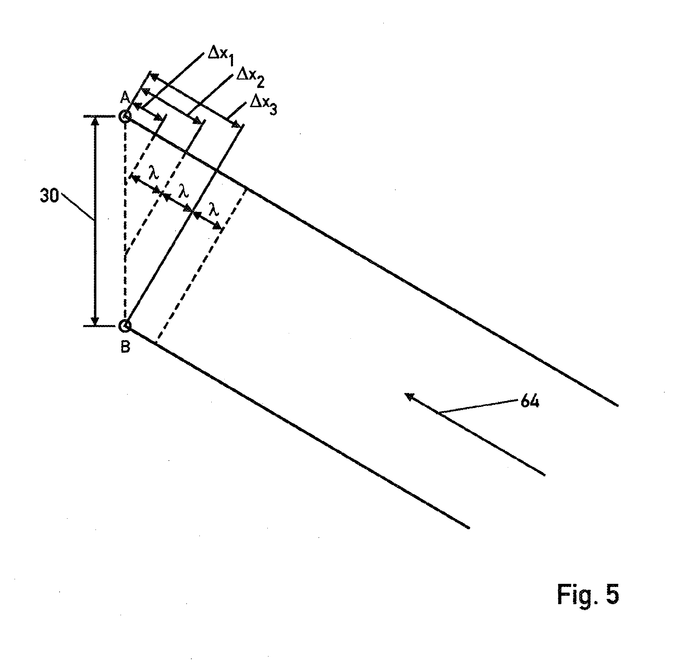

Anschließend wird in Block 44 für die Abtastzeitpunkte die jeweilige Phasendifferenz zwischen den Empfangssignalen der beiden Wandler bestimmt. Abhängig von dem Abstand 30 der beiden Wandler A und B kommt es jedoch zu einer Vieldeutigkeit. Dies ist in Fig. 5 detailliert dargestellt.

Fig. 5 zeigt eine schematische Darstellung einer auf die Wandler A und B auftreffenden Schallwellenfront 64. Ist der Abstand 30 der beiden Wandler größer als die halbe Wellenlänge $\lambda$ der empfangenen Schallwellenfront 64, so kommt es zu Vieldeutigkeiten. Dies heißt, die ermittelte Phasendifferenz der Empfangssignale zwischen den Wandlern A und B ist mehrdeutig und liefert somit, abhängig vom Abstand 30 der Wandler, eine Anzahl vieldeutiger Gangunterschiede $\Delta x_1$, $\Delta_2$, $\Delta x_3$.

In dieser beispielhaften Ausführungsform gemäß Fig. 5 entspricht $\Delta x_3$ dem wahren Gangunterschied der Empfangssignale zwischen den Wandlern A und B. Dieser Gangunterschied $\Delta x_3$ liefert im Zusammenhang mit dem Abstand 30 der Wandler einen zugehörigen Empfangswinkel.

In Block 46 gemäß Fig. 4 werden für die zuvor ermittelten Phasendifferenzen alle vieldeutige Gangunterschiede berechnet. Danach werden für die jeweiligen Gangunterschiede in einem weiteren Block 48 alle aus diesen Gangunterschieden resultierende Auftreffwinkel berechnet, aus denen im Block 50 die zugehörigen Auftreffkoordinaten ermittelt werden. Zu jeder Auftreffkoordinate wird der Abtastzeitpunkt sowie die Position bzw. Lotung gespeichert.

Anschließend wird in Block 52 die Zählvariable i um einen Wert erhöht und im weiteren Block 54 überprüft, ob die Zählvariable den Wert N für die Anzahl der durchzuführenden Lotungen erreicht hat. Ist dies nicht der Fall, wird in einer Schleife zu der Anweisung in Block 40 zurückgesprungen, um die Auftreffkoordinaten zu einer nächsten Lotung aus einer weiteren Position zu ermitteln. Hat die Zählvariable i jedoch den Wert N erreicht, wird in Block 56 eine Datendichte um die Auftreffkoordinaten ermittelt. Die Datendichte ist ein Maß für die Anzahl der zuvor erhobenen Daten innerhalb eines vorbestimmten, die jeweilige Auftreffkoordinate beinhaltenden Bereiches.

Die Ermittlung der Datendichte erfolgt für eine Mehrzahl von N Lotungen und für alle Abtastzeitpunkte dieser betrachteten Lotungen und für jede der Vieldeutigen Auftreffkoordinaten. In Block 58 wird daraus eine maximale Datendichte ermittelt. Bei einem Maximum, wird diejenige Auftreffkoordinate, bei der die Datendichte am größten ist, als gültig ausgegeben und für die Ermittlung des Bodenprofils herangezogen 60. Alle anderen vieldeutigen Auftreffkoordinaten zu diesem Abtastzeitpunkt werden in Block 62 als ungültig gekennzeichnet und verworfen.

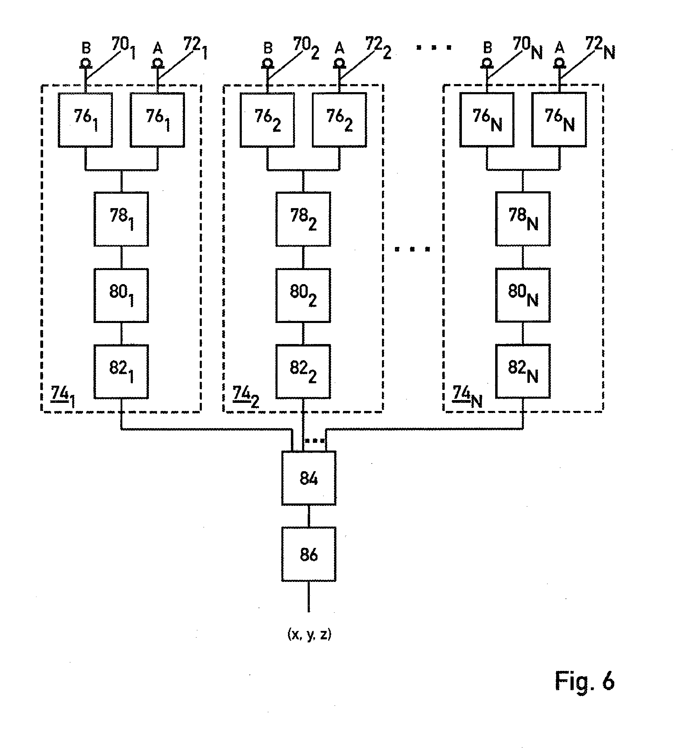

Fig. 6 zeigt ein Blockschaltbild zur Erläuterung der Vorrichtung zum Ausführen des erfindungsgemäßen Verfahrens gemäß Fig. 4.

Die Wandler A und B liefern zu den N Lotungen jeweils ein elektrisches Empfangssignal $70_1$, $70_2$, ..., $70_N$ bzw. $72_1$, $72_2$, ..., $72_N$ deren weitere Signalverarbeitung für die N Lotungen gemäß der Blöcke $74_1$, $74_2$, ..., $74_N$ erfolgt.

Die weitere Beschreibung des Blocks 74 erfolgt anhand der ersten Lotung. Die Ausführungen gelten ebenso für die weiteren zwei bis N Lotungen.

Die elektrischen Empfangssignale $70_1$ und $72_1$ der Wandler A und B werden im Block $76_1$ zu vorbestimmten Abtastzeitpunkten abgetastet und digitalisiert.

In der Berechnungseinheit $78_1$ wird für eine Vielzahl der Abtastzeitpunkte sowohl die Phasendifferenz zwischen den Signalen $70_1$ und $72_1$ als auch die Laufzeit dieser Signale ermittelt.

In einer weiteren Berechnungseinheit $80_1$ werden zu den zuvor ermittelten Phasendifferenzen für die Abtastzeitpunkte, wie zuvor anhand von Fig. 5 erläutert, die zugehörigen vieldeutigen Gangunterschiede ermittelt. Zu diesen vieldeutigen Gangunterschieden werden in einer weiteren Berechnungseinheit $82_1$ für die Abtastzeitpunkte mittels der Signallaufzeiten und der Empfangswinkel die zugehörigen vieldeutigen Auftreffwinkel und Auftreffkoordinaten auf dem Bodenprofil berechnet.

Auf diese Weise werden für eine Vielzahl der Abtastzeitpunkte und für N Lotungen die vieldeutigen Auftreffkoordinaten auf dem Bodenprofil ermittelt. Diese vieldeutigen Auftreffkoordinaten der N Lotungen werden zusammen mit den Angaben der zugehörigen Abtastzeitpunkte einer weiteren Berechnungseinheit 84 übergeben. Dort wird für jeden Abtastzeitpunkt, für jede der N Lotungen und für jede der vieldeutigen Auftreffkoordinaten eine Datendichte in einen, die Auftreffkoordinate beinhaltenden, vorbestimmten Bereich ermittelt. Dabei ist die Datendichte ein Maß für die Anzahl der erhobenen Daten innerhalb dieses Bereiches. Die Auftreffkoordinaten der gleichen Lotungen werden jedoch nicht mitberücksichtigt bei der Ermittlung der Dichte.

Dieser vorbestimmte Bereich ist vorzugsweise ein Flächenelement, dessen Größe klein genug ist und in Abhängigkeit von dem Rechenaufwand festgelegt wird. Es ist jedoch für alle Auftreffkoordinaten gleich groß.

Ein Maximumdetektor 86 ermittelt für die Abtastzeitpunkte die maximale Datendichte. Zu jedem Abtastzeitpunkt wird diejenige Auftreffkoordinate, dessen zugehöriges Flächenelement eine maximale Datendichte besitzt, als gültig gekennzeichnet und entspricht somit dem wahren Bodenpunkt (x, y, z). Die anderen vieldeutigen Auftreffkoordinaten werden als ungültig gekennzeichnet.

Die Auftreffkoordinate (x, y, z) setzt sich wie folgt zusammen: die x-Koordinate lässt sich zu jedem Abtastzeitpunkt mittels der Gesetze der Trigonometrie ermitteln, die y-Koordinate ist abhängig von der Breite 26 des Sendebeams 22 und die z-Koordinate entspricht der aus dem Laufzeitunterschied zwischen den Wandlern A und B ermittelten Höhe *h*.

Das Koordinatensystem ist in diesem Fall auf das Wasserfahrzeug 2 bzw. auf die Sende- und Empfangsanordnung 4 bezogen. Es ist ferner möglich ein absolutes Koordinatensystem für die Durchführung des Verfahrens heranzuziehen, wenn dies entsprechend in der Signalverarbeitung berücksichtigt wird.

Das vorstehend beschriebene Verfahren kann dahingehend abgewandelt werden, dass anstelle von zwei einzelnen Wandlern als Empfangsanordnung ein Wandler-Array verwendet wird. Der Empfangsanordnung wird ein Richtungsbildner bzw. Beamformer nachgeschaltet, der die Empfangssignale der Wandler verzögert und zu Gruppensignalen addiert, so dass ein Fächer von Richtcharakteristiken bzw. Beams in dem Unterwasserareal aufgespannt wird. Die horizontale Breite eines Beams ist durch dessen horizontalen Öffnungswinkel bestimmt. Dies ermöglicht eine höhere Auflösung in y-Richtung, für den Fall, dass keine hinreichend große Bündelung des Sendebeams möglich ist.

Alle in der vorgenannten Figurenbeschreibung, den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum Vermessen eines Bodenprofils (6) mittels einer an einem Wasserfahrzeug (2) angebrachten Sendeanordnung (20) zum gerichteten Abstrahlen von Schallsignalen in ein Unterwasserareal (8) und einer an diesem Wasserfahrzeug (2) angebrachten Empfangsanordnung (28) mit wenigstens zwei Wandlern zum Empfangen der von dem Bodenprofil (6) innerhalb des Unterwasserareals (8) reflektieren Schallwellen, aus denen die Wandler jeweils ein Empfangssignal (70;72) erzeugen, welches zu vorbestimmten Abtastzeitpunkten abgetastet, digitalisiert und gespeichert wird (42),
   **dadurch gekennzeichnet, dass**
   nacheinander mittels der Sendeanordnung (20) mit einer Mehrzahl von N Lotungen aus vorbestimmten Positionen ($P_1$, $P_2$, $P_3$, $P_4$, ..., $P_N$) mit voneinander verschiedenen Aspektwinkeln ($\phi_N$) und Entfernungen ($r_N$) zum Bodenprofil (6) ein Schallsignal in das Unterwasserareal (8) abgestrahlt wird (40) und dessen vom Bodenprofil (6) reflektierten Anteile der N Lotungen mittels der Empfangsanordnung (28) empfangen werden (42),
   für eine Vielzahl der Abtastzeitpunkte und für die N Lotungen aus den Empfangssignalen (70; 72) sowohl eine Phasendifferenz (44) als auch die daraus resultierenden Gangunterschiede (46) der empfangenen Schallwellen zwischen zwei Wandlern der Empfangsanordnung (28) ermittelt werden,
für diese Abtastzeitpunkte und für die N Lotungen zu den Gangunterschieden zugehörige Auftreffwinkel (48) und daraus jeweilige Auftreffkoordinaten ermittelt werden (50),
für diese Abtastzeitpunkte und für die N Lotungen zu den Auftreffkoordinaten eine Datendichte in einem vorbestimmten die jeweilige Auftreffkoordinate beinhaltenden Bereich ermittelt wird (56), wobei die Datendichte ein Maß für die Anzahl der zuvor erhobenen Daten innerhalb dieses Bereiches darstellt, mittels eines Maximumdetektors (86) derjenige Bereich ausgewählt wird, in dem die Datendichte maximal wird und die zu diesem Bereich gehörende Auftreffkoordinate für die Ermittlung des Bodenprofils (6) herangezogen wird (60).

2. Verfahren nach Anspruch 1,
   **dadurch gekennzeichnet, dass**
   die Empfangsanordnung (28) aus zwei einzelnen elektroakustischen und/oder optoakustischen Wandlern besteht, welche in einem Abstand (30) größer als die halbe Wellenlänge ($\lambda$) des Empfangssignals (70; 72) angeordnet sind.

3. Verfahren nach einem Anspruch 1,
   **dadurch gekennzeichnet, dass**
   die Empfangsanordnung (28) aus einer Vielzahl von elektroakustischen und/oder optoakustischen Wandlern besteht und die Schallwellen richtungsselektiv empfangen werden.

4. Verfahren nach einem der vorhergehenden Ansprüche,
   **dadurch gekennzeichnet, dass**
   die Bereiche, die die Auftreffkoordinaten beinhalten und für die Ermittlung der Datendichte herangezogen werden, Flächenelementen mit einer vorbestimmten Größe entsprechen.

5. Verfahren nach einem der vorhergehenden Ansprüche,
   **dadurch gekennzeichnet, dass**
   die vorbestimmten Positionen ($P_1$, $P_2$, $P_3$, $P_4$,..., $P_N$) der N Lotungen durch eine Vorwärtsbewegung der Sende- und Empfangsanordnung (4) erreicht werden.

6. Vorrichtung zur Vermessung eines Bodenprofils (6) mittels einer an einem Wasserfahrzeug (2) angebrachten Sendeanordnung (20) zum gerichteten Abstrahlen von Schallsignalen in ein Unterwasserareal (8) und einer an diesem Wasserfahrzeug (2) angebrachten Empfangsanordnung (28) mit wenigstens zwei Wandlern zum Empfangen der von dem Bodenprofil (6) innerhalb des Unterwasserareals (8) reflektierten Schallwellen, aus denen die Wandler jeweils ein Empfangssignal (70;72) erzeugen, welches zu vorbestimmten Abtastzeitpunkten abtastbar, digitalisierbar und speicherbar ist (42),
**gekennzeichnet durch**
eine Sendeanordnung (20) zum sequentiellen Abstrahlen (40) eines Schallsignals mit einer Mehrzahl von N Lotungen aus vorbestimmten Positionen ($P_1$, $P_2$, $P_3$, $P_4$,..., $P_N$) mit voneinander verschiedenen Aspektwinkeln ($\phi_N$) und Entfernungen ($r_N$) zum Bodenprofil (6) in das Unterwasserareal (8), eine Empfangsanordnung (28) zum jeweiligen Empfangen (42) der vom Bodenprofil (6) reflektierten Anteile der N Lotungen des Schallsignals, zwei Berechnungseinheiten (78; 80) zum Ermitteln, für eine Vielzahl der Abtastzeitpunkte und für die N Lotungen, sowohl einer Phasendifferenz (44) als auch die daraus resultierenden Gangunterschiede (46) der empfangenen Schallwellen zwischen zwei Wandlern der Empfangsanordnung (28),
eine weitere Berechnungseinheit (82) zum Ermitteln von zu den Gangunterschieden zugehörenden Auftreffwinkeln (48) und zum Ermitteln der jeweiligen Auftreffkoordinaten (50) aus den Auftreffwinkeln für diese Abtastzeitpunkte und für die N Lotungen, eine weitere Berechungseinheit (84) zum Ermitteln einer Datendichte (56) der Auftreffkoordinaten für diese Abtastzeitpunkte und für die N Lotungen jeweils in einem vorbestimmten, die jeweilige Auftreffkoordinate beinhaltenden Bereiches, wobei die Datendichte ein Maß für die Anzahl der zuvor ermittelten Daten innerhalb dieses Bereiches darstellt, einen Maximumdetektor (86) zum Auswählen desjenigen Bereiches, in dem die Datendichte maximal wird und zum Ermitteln einer zu diesem Bereich gehörenden Auftreffkoordinate (60) des Bodenprofils (6).

7. Vorrichtung nach Anspruch 6,
**dadurch gekennzeichnet, dass**
die Empfangsanordnung (28) aus zwei einzelnen elektroakustischen und/oder optoakustischen Wandlern besteht, welche in einem Abstand größer als die halbe Wellenlänge ($\lambda$) des Empfangssignals (70;72) angeordnet sind.

8. Vorrichtung nach Anspruch 6,
**dadurch gekennzeichnet, dass**
die Empfangsanordnung (28) aus einer Vielzahl von elektroakustischen und/oder optoakustischen Wandlern besteht, wodurch die Schallwellen richtungsselektiv empfangbar sind.

9. Vorrichtung nach einem der Ansprüche 6 bis 8,
**dadurch gekennzeichnet, dass**
die Bereiche, die die Auftreffkoordinaten beinhalten und für die Ermittlung der Datendichte herangezogen werden, Flächenelemente mit einer vorbestimmten Größe sind.

10. Vorrichtung nach einem der Ansprüche 6 bis 9,
**dadurch gekennzeichnet, dass**
die vorbestimmten Positionen ($P_1$, $P_2$, $P_3$, $P_4$,..., $P_N$) der N Lotungen durch eine Vorwärtsbewegung der Sende- und Empfangsanordnung (4) erreichbar sind.

**Claims**

1. A method for measuring a bottom profile (6) with a transmitting arrangement (20) attached to a water vehicle (2) for the directed emitting of sound signals into an underwater area (8) and with a receiving arrangement (28) attached to this water vehicle (2) with at least two converters for receiving the sound waves reflected from the bottom profile (6) inside the underwater area (8) from which sound waves the converters generate a received signal (70; 72) that is scanned at certain scanning times, digitized and stored (42),
**characterized in that**
a sound signal is successively emitted (40) into the underwater area (8) by the transmitting arrangement (20) with a plurality of N soundings from predetermined positions ($P_1$, $P_2$, $P_3$, $P_4$, ..., $P_N$) with aspect angles ($\varphi_N$) and distances ($r_N$) to the bottom profile (6) that are different from each other, and whose components of the N soundings which components are reflected from the bottom profile (6) are received (42) by the receiving arrangement (28),
a phase difference (44) and also the resulting phase differences (46) of the received sound waves between two converters of the receiving arrangement (28) are determined for a plurality of the scanning times and for the N soundings from the received signals (70; 72),
associated angles of incidence (48) and their coordinates of incidence are determined (50) for these scanning times and for the N soundings to the phase differences,
a data density in a predetermined area containing the particular coordinates of incidence is determined (56) for these scanning times and for the N soundings to the coordinates of incidence, whereby the data density represents a measure for the number of the previously taken data inside this area,
the area is selected by a maximum detector (86) in which area the data becomes maximum and the coordinate of incidence belonging to this area is used for determining the bottom profile (6).

2. The method according to claim 1,
**characterized in that**
the receiving arrangement (28) consists of two individual electroacoustic and/or optoacoustic converters that are arranged at a distance (30) greater than one half the wavelength ($\lambda$) of the received signal (70; 72).

3. The method according to claim 1,
   **characterized in that**
   the receiving arrangement (28) consists of a plurality of electroacoustic and/or optoacoustic converters and that the sound waves are received in a directionally selective manner.

4. The method according to one of the previous claims,
   **characterized in that**
   the areas that contain the coordinates of incidence and are used for determining the data density correspond to area elements with a predetermined size.

5. The method according to one of the previous claims,
   **characterized in that** the
   predetermined positions ($P_1$, $P_2$, $P_3$, $P_4$, ..., $P_N$) of the N soundings are achieved by a forward movement of the transmitting and receiving arrangement (4).

6. A device for measuring a bottom profile (6) with a transmitting arrangement (20) attached to a water vehicle (2) for the directed emitting of sound signals into an underwater area (8) and with a receiving arrangement (28) attached to this water vehicle (2) with at least two converters for receiving the sound waves reflected from the bottom profile (6) inside the underwater area (8) from which sound waves the converters generate a received signal (70; 72) that can be scanned at certain scanning times, digitized and stored (42),
   **characterized by**
   a transmitting arrangement (20) for the sequential emitting (40) of the sound signal with a plurality of N soundings from predetermined positions ($P_1$, $P_2$, $P_3$, $P_4$, ..., $P_N$) with aspect angles ($\varphi_N$) and distances ($r_N$) to the bottom profile (6) that are different from each other into the underwater areal (8),
   a receiving arrangement (28) for the particular receiving (42) of the components of the N soundings of the sound signal which components are reflected from the bottom profile (6),
   two calculating units (78; 80) for determining, for a plurality of the scanning times and for the N soundings, a phase difference (44) as well as the resulting phase differences (46) of the received sound waves between two converters of the receiving arrangement (28),
   another calculating unit (82) for determining angles of incidence (48) associated with the phase differences and for determining the particular coordinates of incidence (50) from the angles of incidence for these scanning times and for the N soundings,

another calculating unit (84) for determining a data density (56) of the coordinates of incidence for these scanning times and for the N sounding in a predetermined area containing the particular coordinates of incidence, whereby the data density represents a measure for the number of previously determined data inside this area,
a maximum detector (86) for selecting the area in which the data density becomes maximum and for determining a coordinate of incidence (60) of the bottom profile (6) which coordinate belongs to this area.

7. The device according to claim 6
   **characterized in that**
   the receiving arrangement (28) consists of two individual electroacoustic and/or optoacoustic converters that are arranged at a distance greater than one half the wavelength ($\lambda$) of the received signal (70; 72).

8. The device according to claim 6
   **characterized in that**
   the receiving arrangement (28) consists of a plurality of electroacoustic and/or optoacoustic converters with which the sound waves can be received in a directionally selective manner.

9. The device according to one of claims 6 to 8
   **characterized in that**
   the areas that contain the coordinates of incidence and are used for determining the data density are area elements with a predetermined size.

10. The device according to one of claims 6 to 9
    **characterized in that**
    the predetermined positions ($P_1$, $P_2$, $P_3$, $P_4$, ..., $P_N$) of the N soundings can be achieved by a forward movement of the transmitting and receiving arrangement (4).

**Revendications**

1. Procédé de mesure d'un profil du sol (6) au moyen d'un dispositif d'émission (20) monté sur une embarcation (2) pour l'émission directionnelle de signaux acoustiques dans une aire sous-marine (8) et d'un dispositif de réception (28) monté sur cette embarcation (2) avec au moins deux transducteurs pour recevoir les ondes acoustiques réfléchies par le profil du sol (6) à l'intérieur de l'aire sous-marine (8), à partir desquelles les transducteurs génèrent respectivement un signal de réception (70 ; 72) qui est échantillonné, numérisé et enregistré (42) à des instants d'échantillonnage prédéterminés,
   **caractérisé en ce que**
   successivement, un signal acoustique est émis (40) dans l'aire sous-marine (8) au moyen du dispositif d'émission (20) avec une pluralité de N sondages depuis des positions prédéterminées ($P_1$, $P_2$, $P_3$, $P_4$, ..., $P_N$) avec des angles d'aspect ($\phi_N$) et des distances ($r_N$) au profil du sol (6) différents les uns des autres et les fractions des N sondages de celui-ci réfléchies par le profil du sol (6) sont reçues (42) au moyen du dispositif de réception (28),

pour une pluralité des instants d'échantillonnage et pour les N sondages aussi bien une différence de phase (44) que les différences de marche résultantes (46) des ondes acoustiques reçues sont déterminées entre deux transducteurs du dispositif de réception (28) à partir des signaux de réception (70 ; 72),

pour ces instants d'échantillonnage et pour les N sondages des angles d'incidence (48) associés aux différences de marche et à partir de ceux-ci des coordonnées d'incidence respectives sont déterminés (50),

pour ces instants d'échantillonnage et pour les N sondages une densité de données dans une zone prédéterminée contenant la coordonnée d'incidence respective est déterminée (56) concernant les coordonnées d'incidence, la densité de données représentant une grandeur pour le nombre des données recueillies auparavant à l'intérieur de cette zone,

au moyen d'un détecteur de maximum (86) la zone dans laquelle la densité de données devient maximale est sélectionnée et la coordonnée d'incidence appartenant à cette zone est utilisée (60) pour déterminer le profil du sol (6).

2. Procédé selon la revendication 1,
   **caractérisé en ce que**
   le dispositif de réception (28) est constitué de deux transducteurs électroacoustiques et/ou opto-acoustiques individuels, qui sont agencés à une distance (30) supérieure à la moitié de la longueur d'onde ($\lambda$) du signal de réception (70 ; 72).

3. Procédé selon la revendication 1,
   **caractérisé en ce que**
   le dispositif de réception (28) est constitué d'une pluralité de transducteurs électroacoustiques et/ou opto-acoustiques et les ondes acoustiques sont reçues de manière sélective en fonction de la direction.

4. Procédé selon l'une des revendications précédentes,
   **caractérisé en ce que**
   les zones qui contiennent les coordonnées d'incidence et qui sont utilisées pour déterminer la densité de données correspondent à des éléments de surface d'une taille prédéterminée.

5. Procédé selon l'une des revendications précédentes,
   **caractérisé en ce que**

les positions prédéterminées ($P_1$, $P_2$, $P_3$, $P_4$, ..., $P_N$) des N sondages sont atteintes par un mouvement vers l'avant du dispositif d'émission et de réception (4).

6. Dispositif de mesure d'un profil du sol (6) au moyen d'un dispositif d'émission (20) monté sur une embarcation (2) pour l'émission directionnelle de signaux acoustiques dans une aire sous-marine (8) et d'un dispositif de réception (28) monté sur cette embarcation (2) avec au moins deux transducteurs pour recevoir les ondes acoustiques réfléchies par le profil du sol (6) à l'intérieur de l'aire sous-marine (8), à partir desquelles les transducteurs génèrent respectivement un signal de réception (70 ; 72) qui peut être échantillonné, numérisé et enregistré (42) à des instants d'échantillonnage prédéterminés,
   **caractérisé par**
   un dispositif d'émission (20) pour l'émission séquentielle (40) d'un signal acoustique dans l'aire sous-marine (8) avec une pluralité de N sondages depuis des positions prédéterminées ($P_1$, $P_2$, $P_3$, $P_4$, ..., $P_N$) avec des angles d'aspect ($\phi_N$) et des distances ($r_N$) au profil du sol (6) différents les uns des autres,

   un dispositif de réception (28) pour la réception respective (42) des fractions réfléchies par le profil du sol (6) des N sondages du signal acoustique,

   deux unités de calcul (78 ; 80) pour déterminer, pour une pluralité des instants d'échantillonnage et pour les N sondages, aussi bien une différence de phase (44) que les différences de marche résultantes (46) des ondes acoustiques reçues entre deux transducteurs du dispositif de réception (28),

   une autre unité de calcul (82) pour déterminer des angles d'incidence associés aux différences de marche (48) et pour déterminer les coordonnées d'incidence (50) respectives à partir des angles d'incidence pour ces instants d'échantillonnage et pour les N sondages,

   une autre unité de calcul (84) pour déterminer une densité de données (56) des coordonnées d'incidence pour ces instants d'échantillonnage et pour les N sondages respectivement dans une zone prédéterminée contenant la coordonnée d'incidence respective, la densité de données représentant une grandeur pour le nombre des données déterminées auparavant à l'intérieur de cette zone,

   un détecteur de maximum (86) pour sélectionner la zone dans laquelle la densité de données devient maximale et pour déterminer une coordonnée d'incidence (60) appartenant à cette zone du profil du sol (6).

7. Dispositif selon la revendication 6,
   **caractérisé en ce que**
   le dispositif de réception (28) est constitué de deux transducteurs électroacoustiques et/ou opto-acoustiques individuels, qui sont agencés à une distance supérieure à la moitié de la longueur d'onde (λ) du signal de réception (70 ; 72).

8. Dispositif selon la revendication 6,
   **caractérisé en ce que**
   le dispositif de réception (28) est constitué d'une pluralité de transducteurs électroacoustiques et/ou opto-acoustiques, ce par quoi les ondes acoustiques peuvent être reçues de manière sélective en fonction de la direction.

9. Dispositif selon l'une des revendications 6 à 8,
   **caractérisé en ce que**
   les zones qui contiennent les coordonnées d'incidence et qui sont utilisées pour déterminer la densité de données sont des éléments de surface d'une taille prédéterminée.

10. Dispositif selon l'une des revendications 6 à 9,
    **caractérisé en ce que**
    les positions prédéterminées ($P_1$, $P_2$, $P_3$, $P_4$, ..., $P_N$) des N sondages peuvent être atteintes par un mouvement vers l'avant du dispositif d'émission et de réception (4).

Fig. 1

A

20

P$_1$ P$_2$ P$_3$ P$_4$

28

22

B

26

22

28

20

24

Fig. 2

Fig. 3

Fig. 4

Fig. 5

Fig. 6

**EP 2 480 911 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19959014 A1
- DE 102005041390 A1
- DE 1548452 A

**In der Beschreibung aufgeführte Nicht-Patentliteratur**

- **VON PHILIP N. DENBIGH.** Signal Processing Strategies for a Bathymetric Sidescan Sonar. *IEEE Journal of Oceanic Engineering,* Juli 1994, vol. 19 (3), 382-390

17